# EUROPÄISCHE PATENTSCHRIFT

(11) **EP 4 430 363 B1**
(45) Veröffentlichungstag und Bekanntmachung des Hinweises auf die Patenterteilung: **15.04.2026**
(21) Anmeldenummer: 22823069.4
(22) Anmeldetag: 30.11.2022
(51) Int. Cl.: G01D 18/00

(54) **VERFAHREN ZUR SELBST-EICHUNG UND SELBST-KALIBRIERUNG VON MESSGERÄTEN**
SELF-CALIBRATION METHOD AND SELF-CALIBRATION OF MEASURING DEVICES
PROCÉDÉ D'AUTO-ÉTALONNAGE ET AUTO-ÉTALONNAGE DE DISPOSITIFS DE MESURE

(30) Priorität: 21.12.2021 DE 102021214808
(43) Veröffentlichungstag der Anmeldung: 18.09.2024
(73) Patentinhaber: Siemens Energy Global GmbH & Co. KG, 81739 München (DE)
(72) Erfinder: RATHGEB, Andreas, 91099 Poxdorf (DE)
(86) Internationale Anmeldenummer: PCT/EP2022/083792
(87) Internationale Veröffentlichungsnummer: WO 2023/117341

(56) Entgegenhaltungen:
- DE-A1- 102019 125 116
- US-A1- 2019 068 999
- MUSTAPAA TUUKKA ET AL: "Digital Metrology for the Internet of Things", 2020 GLOBAL INTERNET OF THINGS SUMMIT (GIOTS), IEEE, 3 June 2020 (2020-06-03), pages 1 - 6, XP033782431, DOI: 10.1109/GIOTS49054.2020.9119603
- KOMAROV MIKHAIL ET AL: "Integration of Distributed Ledger Technology and Modem Smart Grids: An Outlook", 2021 IEEE 23RD CONFERENCE ON BUSINESS INFORMATICS (CBI), IEEE, vol. 2, 1 September 2021 (2021-09-01), pages 182 - 191, XP034026248, DOI: 10.1109/CBI52690.2021.10070

## Beschreibung

Die Erfindung betrifft eine vertrauenswürdige Methode zur Selbst-(Nach-)Eichung oder Selbst-Kalibrierung von Geräten, insbesondere Messgeräten, in Hand des Betreibers.

Der Eichprozess für ein Messgerät erfolgt gemäß den eichrechtlichen Vorschriften wie folgt.

Herstelleraufgaben:
Das Messgerät muss bauartgemäß eichfähig sein. Diese stellt der Hersteller sicher, indem er die Bauartzulassung zum Beispiel bei der Physikalisch Technischen Bundesanstalt (PIB) beantragt. Die PIB ist eine staatlich anerkannte Prüfstelle und arbeitet nach klaren Konformitätsbewertungsverfahren.

Hierbei werden Genauigkeitsklassen und Messbeständigkeit und Verkehrsfehlergrenzen festgelegt. Zusätzlich müssen die Geräte gegen Verfälschung bereits vom Hersteller geschützt werden.

In der Regel sind die Geräteinstanzen, die nach dem Baumuster gefertigt sind, für eine definierte Zeit ab Werk geeicht. Dies wird durch das Eichlabel ausgedrückt, das Dauer, Zulassungszeichen, Testdatum und Prüfstelle am Gerät dokumentiert.

Der Hersteller hat auch die Pflicht zur Sicherstellung und Erhalt der Eichfähigkeit des Gerätes durch Stichproben von Geräten auf dem Markt.

Betreiberaufgaben:
Der Messgerätebetreiber hat die Pflicht, vor Ablauf der Gültigkeit der Eichung eine erneute Eichung durchführen zu lassen und dies zu dokumentieren. Auf Nachfrage muss er zu jedem Zeitpunkt die Gültigkeit der Eichung nachweisen können.

Hierzu wird
- ein Eichauftrag an die Prüfstelle gegeben,
- ein Termin vereinbart,
- die Eichvoraussetzungen für das Gerät geschaffen (Stopp Betrieb, Ausbau, und so weiter),
- dem Eichpersonal der Zugang genehmigt und vorbereitet. Unter Umständen sind dies gefährdete Bereiche, die nur unter besonderen Bedingungen zugänglich sind (Schulung, Abgrenzung),
- die Nacheichung durchgeführt,
- das Gerät wieder eingebaut,
- der Nachweis am Gerät gekennzeichnet,
- der Vorgang dokumentiert und abgerechnet.

Bei Nichterfolg muss die Prozedur gegebenenfalls wiederholt werden.

Prüfstellenaufgaben:
Prüfstellen sind gesetzlich anerkannte Ausführungsorgane, die über die fachliche Kompetenz und das Personal zur Ausführung von Eichungen verfügen. Prüfstellen sind verpflichtet, die Verwendung zu überwachen und die Nacheichung anzubieten. Prüfstellen verwenden für die Nacheichung sogenannte Arbeitsnormale, die von einem Referenzmessobjekt, dem Normal abgeleitet sind und vor Ort eingesetzt werden dürfen.

Wiederkehrende Prüfungen können je nach Messgerät und Prüfumfang / Prüfwert unterschiedlichen Aufwand und Kosten haben. Die Nacheichung kann zum Beispiel 55 - 245 EUR (etwa für Waagen) zuzüglich der Spesen kosten. Enthalten sind je nach Prüfobjekt dabei die Prüfmarke und die Formalitäten.

Eine Nacheichung von Messgeräten durch den Betreiber selbst ist nur bedingt vertrauenswürdig.

Aus der Patentschrift DE102019125116A1 ist bereits ein kalibrierbares Werkzeug mit Sensoren zur Messung externer Einwirkungen bekannt. Eine Steuerungsvorrichtung analysiert die Messwerte und setzt bei Überschreitung vorgegebener Bereiche automatisch ein früheres Kalibrierungsdatum. Das System zielt darauf ab, die Kalibrierung von Messgeräten zu überwachen und bei Bedarf anzupassen, ohne dass eine manuelle Überprüfung erforderlich ist. Die DE102019125116A1 offenbart aber keine Distributed Ledger Technology (DLT), um einen digitalisierten Prozessablauf für die Kalibrierung einzurichten.

Die Patentschrift US20190068999A1 beschreibt ein System zur Validierung der Integrität von Mediendaten mittels digitaler Kalibrierungszertifikate (DCCs). Die DCCs werden in einer verteilten Ledger-Technologie (DLT) gespeichert und ermöglichen eine sichere Überprüfung der Datenqualität. Das System zielt darauf ab, die Vertrauenswürdigkeit und Rückverfolgbarkeit von Messdaten in IoT-Umgebungen zu verbessern. Die US20190068999A1 offenbart keine Prüfinstanz, die eine durch die DLT gesicherte Wirkverbindung zwischen dem zu kalibrierenden Gerät und einem Arbeitsnormal herstellt.

Die Publikation KOMAROV MIKHAIL ET AL: "Integration of Distributed Ledger Technology and Modem Smart Grids: An Outlook", 2021 IEEE 23RD CONFERENCE ON BUSINESS INFORMATICS (CBI), IEEE, Bd. 2,1. September 2021 (2021-09-01), Seiten 182-191, XP034026248, schlägt eine Blockchain-basierte Architektur für Smart Grids vor. Es beschreibt ein mehrstufiges System, bei dem Messdaten von intelligenten Zählern über verschiedene Netzwerkebenen aggregiert und mittels kryptographischer Verfahren geschützt werden. Ziel ist es, die Datenintegrität und -sicherheit im Smart Grid zu erhöhen und gleichzeitig eine effiziente Verwaltung der Messdaten zu ermöglichen. Ein konkreter Kalibrierungsprozess, mit dem eine verschlüsselte Übertragung von Messdaten an eine Prüfinstanz möglich wäre, wird jedoch nicht beschrieben.

Die Publikation MUSTAPAA TUUKKA ET AL: "Digital Metrology for the Internet of Things", 2020 GLOBAL INTERNET OF THINGS SUMMIT (GIOTS), IEEE, 3. Juni 2020 (2020-06-03), Seiten 1-6, XP033782431, DOI: 10.1109/GIOTS49054.2020.9119603, stellt ein Konzept vor, das digitale Metrologie-Praktiken auf IoT-Geräte anwendet. Es nutzt digitale Kalibrierungszertifikate (DCCs), ein digitales Einheitensystem (D-SI) und DLT, um die Rückverfolgbarkeit und Vertrauenswürdigkeit von IoT-Messdaten zu gewährleisten. Das System zielt darauf ab, die Datenqualität zu quantifizieren und die Verwendung von IoT-Daten in kritischen Anwendungen zu ermöglichen. Die Punlikation beschreibt jedoch keine Prüfinstanz oder ein spezifisches Arbeitsnormal im Kalibrierungsprozess.

Der Erfindung liegt das Problem zugrunde, ein Verfahren zu schaffen, wie ein Betreiber selbst vor Ort eine Kalibrierung oder Eichung eines Gerätes, insbesondere Messgerätes, durchzuführen vermag, die den Anforderungen einer Eichung genügt.

Das Problem wird durch ein Verfahren mit den Merkmalen des Anspruchs 1 gelöst.

Das Problem wird durch die Verwendung von distributed ledger technology (DLT) aufwandsarm und ohne Verlust an Vertrauen in den Prozess und das Ergebnis gelöst. Hierfür werden durch die Beteiligten entsprechende Maßnahmen erforderlich, die durch einen spezifischen Ablauf das angestrebte Ergebnis erreichen.

Erfindungsgemäß wird die Kalibrierung von Messgeräten mit einem vertrauenswürdigen digitalen Prozess, insbesondere automatisiert, durchgeführt.

Betreiber:
Der aktuell noch manuelle aufwändige Vorgang wird durch effiziente digitale Vorgänge ersetzt und beschleunigt. Die Nacheichungsvorgänge können flexibel geplant und durchgeführt werden. Reisekosten werden durch reine Transportkosten (Arbeitsnormale) minimiert.
Durch die transparente Dokumentation der Eichung über das Internet kann zusätzliches Vertrauen bei den Kunden (Autofahrer, Lebensmittelkäufer, Stromablesung) hergestellt werden.

Hersteller:
Die Geräte werden für die Kunden attraktiver, da besser nutzbar.
Die Qualitätssicherung für den Hersteller ist vereinfacht durch die vollständige Erfassung. Eine Auswertung von Massendaten (Verhalten der Geräte beim Nacheichungsvorgang) kann zur Qualitätserfassung statistisch herangezogen werden.
Die Fähigkeit verschlüsselte Messinformation bereitzustellen kann für weitere Dienstleistungen verwendet werden, die zum Beispiel für Abrechnungszwecke notwendig werden (automatedpay-per-use).

Prüfstelle:
Der Aufwand und die Kosten für die Dienstleistung sinken.
Dies kann für Prüfstellen, die früh dieses Konzept einsetzen ein Alleinstellungsmerkmal sein.

### Neuer Nutzer: beliebige Vertragspartner

Der beschriebene digitalisierte Prozess kann vergleichbar für die Verwendung in nicht eichpflichtigen Bereichen zum Einsatz kommen. In diesem Fall werden die durch den Hersteller implementierten Messgeräteeigenschaften durch die Vertragsparteien selbst zum Einsatz gebracht.

Die Funktion kann hier auch in Geräten ohne Baumusterprüfung und mit einvernehmlich hergestellten Arbeitsnormalen zum Einsatz kommen, da hier lediglich die vom Hersteller gewährleistete Genauigkeit als hinreichend bewertet wird.

Auch die vom Hersteller bereitgestellte Ersteichung kann hier von den Vertragsparteien umgesetzt werden.

In diesem Anwendungsfall kann der Hersteller selbst und/oder die Vertragsparteien also ohne Prüfstelle eine Kalibrierung nach oben beschriebenem Prozess vereinbaren und aufrechterhalten. In diesem Fall ist DLT als vertrauenswürdige Technologie eine solide und nachvollziehbare Basis, um gegebenenfalls einen Disput einvernehmlich beizulegen.

Diese herstellerbasierte Nachkalibrierungsdienstleistung ermöglicht dem Hersteller nun eine dauerhaft qualitativ hochwertige und damit nachhaltigere Nutzung der Geräte anzubieten, die erhöhte Zuverlässigkeit beim Endkunden bietet.

Vorteilhafte Weiterbildungen der Erfindung sind in den Unteransprüchen angegeben.

Die Erfindung wird im Folgenden als Ausführungsbeispiel in einem zum Verständnis erforderlichen Umfang anhand einer Figur näher erläutert. Dabei zeigt:
FIG eine schematische Darstellung der das erfindungsgemäße Verfahren realisierenden Elemente.

Das Problem wird durch die Verwendung von distributed ledger technology (DLT) aufwandsarm und ohne Verlust an Vertrauen in den Prozess und das Ergebnis gelöst. Hierfür werden durch die Beteiligten entsprechende Maßnahmen erforderlich, die durch einen spezifischen Ablauf das gewünschte Ergebnis erreichen.

Hinweis: DLT, oft auch unter dem Stichwort "blockchain" beschrieben, stellt unter Verwendung einer besonderen Infrastruktur unter anderem nicht fälschbare Speicherung und nicht fälschbare Automatismen zur Verfügung.

Erfindungsgemäß umfassen die Maßnahmen die nicht fälschbar digital erfassbaren Eigenschaften der realen Geräte, einen Prozessablauf, der mittels digitalisierter Datenkette (DLT) gesichert ist einschließlich einer DLT-gesicherten Datenspeicherung.

Durch die Erfassung spezifischer Daten:
- Hersteller, Gerätetyp, Baumusterzulassung, Version Hardware und Software,
- Geräteinstanz, Charge,...
- Betreiber im Zeitraum xy,
- Verwendungszweck,
- Prüfstelle,
- Eichdatum, Dauer, Prüfung,
- Arbeitsnomal Instanz (geplant, verwendet)

Durch digitalisierten Ablauf:
Das eichfähige Messgerät G wird beim Hersteller hinsichtlich Bautyp, Zertifikat und Instanz erfasst und spätestens mit der Auslieferung einschließlich der Eichdaten (Prüfdatum, Gültigkeitsdauer) registriert (DLT). Zusätzlich enthält das eichfähige Messgerät eine Fähigkeit, verschlüsselt eichrelevante Informationen zu jeder Messung auszugeben.

Der Betreiber kauft das Messgerät und registriert die Verwendung (DLT) spätestens vor Ablauf der Gültigkeitsdauer. Vor Ablauf beantragt er bei einer Prüfstelle I die Nacheichung und berechtigt die Prüfstelle zum Zugriff auf die Daten.

Die Prüfstelle veranlasst die Prüfung.

Hierfür wählt sie ein oder mehrere Arbeitsnormale A. Die Arbeitsnormale erhalten eine besondere Eigenschaft: Sie sind mit maschinenlesbaren Daten versehen, die unter anderem die verschlüsselte und eine separate unverschlüsselte Identifikation des Arbeitsnormals ermöglichen.

Die Arbeitsnormale werden in einer geeigneten Transportform dem Betreiber gegebenenfalls versiegelt übersandt.

Empfindliche Arbeitsnormale könnten gegebenenfalls aktive Überwachungsfunktionen beinhalten, die die Unversehrtheit sicherstellen. Die Arbeitsnormale können ohne oder nur mit verschlüsselter Angabe der Messgröße versandt werden, um auch mit ungeraden, nicht vorhersagbaren Messgrößen (stochastisch) Kalibrierungen oder Nacheichungen durchführen zu können.

Die Arbeitsnormale können je nach Messgröße mit zusätzlicher Intelligenz ausgestattet sein, die die korrekte Verwendung sicherstellt.

Beispiel: Die Nacheichung einer Zapfsäule wird durch einen Prüfbehälter als Arbeitsnormal sichergestellt, der den Anschluss an der zu eichenden Zapfsäule erkennen kann. Der Behälter kann mit der Zapfsäule kommunizieren und das Signal zur Befüllung selbst auslösen. Der Behälter kann das Prüfmedium erkennen (Dichte). Der Behälter kann die Temperatur und den Druck erkennen. Die Daten können über den Betreiber verschlüsselt ausgelesen werden und in der Plausibilitätsprüfung integriert werden.

So ist es möglich, die korrekte Nutzung des Arbeitsnormals im Nacheichungsvorgang mit dem Messgerät sicherzustellen. Die individuelle Lösung ist abhängig von der Messgröße und den Geräten.

Zusätzlich erstellt die Prüfstelle eine (individuelle) Nacheichungsablaufvorschrift unter Verwendung der individuellen Arbeitsnormale. Der Ablauf ist so gestaltet, dass er durch ein geeignetes (mobiles) Hilfsgerät des Betreibers (Smartphone, Tablet, web-based) online durchgeführt werden kann. Diese Vorschrift ist Teil der DLT Datenerfassung und einer begleitenden Prüfung auf Plausibilität und Korrektheit (Fehlertoleranz).

Der Betreiber stellt die erforderlichen Rahmenbedingungen sicher. Er registriert sich für den Prüfvorgang und startet diesen. Er führt die Prüfschritte anstatt einem Mitarbeiter der Prüfstelle durch. Dabei erfasst er die erforderlichen und abgefragten Daten. Zu jedem Messvorgang übermittelt das eichfähige Messgerät die verschlüsselten Nacheichinformationen, die zum Beispiel durch QR-tag und Smartphone oder durch Zeichenfolgen am Messgerät auslesbar sind. Die Daten werden gespeichert (DLT) und nach Möglichkeit während des Prüfvorganges ausgewertet. Der Betreiber kann einen Ausdruck des Zertifikats herstellen und diesen am Gerät anbringen. Er sendet die Arbeitsnormale zurück, die durch die Prüfstelle für den nächsten Vorgang eine neue verschlüsselte Identifikation erhalten können.

Die Prüfstelle erteilt im Erfolgsfall online das Zertifikat. Das Ergebnis wird gespeichert (DLT). Der Betreiber erhält Zugriff auf diese Daten. Er kann diese Daten öffentlich freischalten, so dass Kunden diese gegebenenfalls einsehen dürfen (Waage Ladentheke, Tankstelle Zapfsäule). Die Prüfstelle kann gegebenenfalls Stichproben mit eigenem Personal ansetzen.

Der Hersteller erhält anonymisierten Zugriff auf die Daten seiner Geräte und kann seinem Prüfauftrag zur Optimierung und Qualitätssicherung mit Hilfe der Prüfstellen nachkommen.

Zusätzlich zu den Nacheichvorgängen können weitere zum Beispiel summarische Bilanzprüfung in die Kalibrierung integriert werden (Gesamtbezug an Treibstoff einer Tankstelle in Bezug auf die insgesamt verkaufte Menge über geeichte Geräte).

Die vorliegende Erfindung wurde zu Illustrationszwecken anhand von konkreten Ausführungsbeispielen im Detail erläutert. Dabei können Elemente der einzelnen Ausführungsbeispiele auch miteinander kombiniert werden. Die Erfindung soll daher nicht auf einzelne Ausführungsbeispiele beschränkt sein, sondern lediglich eine Beschränkung durch die angehängten Ansprüche erfahren.

### Bezugszeichenliste

A - Arbeitsnormal
D - Gerät (engl: device), Messgerät
DLT - Datenkette, Blockchain
I - Prüfinstanz, Hersteller

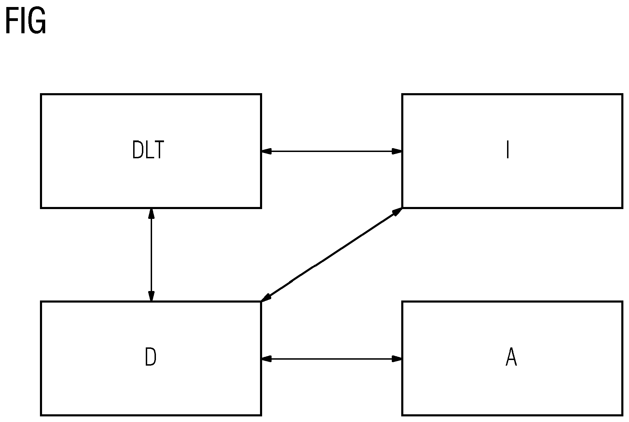

## Patentansprüche

1. Verfahren zur gesicherten Datenerfassung von Geräten, insbesondere Messgeräten, zum Zwecke der Kalibrierung oder Eichung, demzufolge
- ein digitalisierter Prozessablauf in einer Datenkette (DLT), insbesondere Blockchain, die unter Anwendung einer distributed ledger technology erstellt und gesichert ist, eingerichtet wird,
- ein Gerät (D), das dazu eingerichtet ist, verschlüsselte Messinformation, insbesondere Daten aus Messvorgängen, auszugeben, mit seinen implementierten Messgeräteeigenschaften, insbesondere Identifikationsmerkmalen, in der Datenkette (DLT) registriert wird,
- eine Prüfinstanz (I) Zugriff auf die Messinformation des Gerätes (D) erhält,
- die Prüfinstanz (I) eine Wirkverbindung, die durch die Datenkette (DLT) gesichert ist, zwischen dem Gerät (D) und einem Arbeitsnormal (A) herstellt, wobei das Arbeitsnormal mit Identifikationsdaten versehen ist, derart, dass eine verschlüsselte Identifikation des Arbeitsnormals und eine gesonderte unverschlüsselte Identifikation des Arbeitsnormals gegeben ist, wobei das Arbeitsnormal (A) dazu ausgestaltet ist, Messdaten zu ermitteln und wobei
- die ermittelten Messdaten des Arbeitsnormals (A) verschlüsselt ausgelesen und an die Prüfinstanz (I) verschlüsselt übertragen werden,
- die Prüfinstanz (I) bei einer erfolgreichen Kalibrierung oder Eichung des Gerätes eine Speicherung dieses Ergebnisses in der Datenkette (DLT) bewirkt.

2. Verfahren nach Anspruch 1,
**dadurch gekennzeichnet, dass**
die Messgeräteeigenschaften eines, insbesondere eichfähigen, Messgerätes (D) durch eine wahlfreie Auswahl aus der Gruppe Hersteller, Gerätetyp, Bautyp, Baumusterzulassung, Version Hardware, Version Software, Zertifikat, Instanz, Eichdaten, Prüfdatum, Gültigkeitsdauer erfasst werden.

3. Verfahren nach Anspruch 1,
**dadurch gekennzeichnet, dass**
ein eichfähiges Messgerät (D) dazu eingerichtet ist, eichrelevante Informationen zu jeder Messung verschlüsselt auszugeben.

4. Verfahren nach einem der vorstehenden Ansprüche,
**dadurch gekennzeichnet, dass**
das Arbeitsnormal (A) eine aktive Überwachungsfunktion beinhaltet, anhand der die Unversehrtheit des Arbeitsnormals festgestellt wird.

5. Verfahren nach einem der vorstehenden Ansprüche,
**dadurch gekennzeichnet, dass**
das Arbeitsnormal (A) für jeden Prozessablauf durch die Prüfinstanz (I) eine neue verschlüsselte Identifikation erhält.

6. Verfahren nach einem der vorstehenden Ansprüche,
**dadurch gekennzeichnet, dass**
das Gerät (D) zu einem Messvorgang eine verschlüsselte Kalibrierungsinformation oder eine verschlüsselte Nacheichinformation ausgibt.

7. Verfahren nach Anspruch 6,
**dadurch gekennzeichnet, dass**
die ausgegebene verschlüsselte Kalibrierungsinformation oder die verschlüsselte Nacheichinformation durch QR-tag und Smartphone am Gerät auslesbar ist.

8. Verfahren nach Anspruch 6,
**dadurch gekennzeichnet, dass**
die ausgegebene verschlüsselte Kalibrierungsinformation oder die verschlüsselte Nacheichinformation durch Zeichenfolgen am Gerät auslesbar ist.

9. Verfahren nach einem der vorstehenden Ansprüche,
**dadurch gekennzeichnet, dass**
das Gerät nach Maßgabe der ermittelten Messdaten des Arbeitsnormals (A) kalibriert oder geeicht wird.

## Claims

1. A method for secure data acquisition from devices, in particular measurement devices, for the purpose of calibration or standardisation, according to which
- a digitalised process flow in a data chain (DLT), in particular a blockchain, which is created and secured using distributed ledger technology, is established,
- a device (D) configured to output encrypted measurement information, in particular data from measurement operations, is registered in the data chain (DLT) with its implemented measurement device properties, in particular identification features,
- a test entity (I) obtains access to the measurement information of the device (D),
- the test entity (I) establishes an operative connection, secured by the data chain (DLT), between the device (D) and a working standard (A), wherein the working standard is provided with identification data such that an encrypted identification of the working standard and a separate unencrypted identification of the working standard are given, wherein the working standard (A) is designed to determine measurement data, and wherein
- the determined measurement data of the working standard (A) are read out in encrypted form and are transmitted to the test entity (I) in encrypted form,
- the test entity (I) causes storing of this result in the data chain (DLT) upon successful calibration or standardisation of the device.

2. The method according to claim 1,
**characterised in that** the measurement device properties of a measurement device (D), in particular a standardisable measurement device, are acquired by an optional selection from the group manufacturer, device type, construction type, type approval, hardware version, software version, certificate, entity, calibration data, test date, validity period.

3. The method according to claim 1,
**characterised in that** a standardisable measurement device (D) is configured to output standardisation-relevant information for each measurement in encrypted form.

4. The method according to any one of the preceding claims,
**characterised in that** the working standard (A) includes an active monitoring function by means of which the integrity of the working standard is determined.

5. The method according to any one of the preceding claims,
**characterised in that** the working standard (A) receives a new encrypted identification for each process flow through the test entity (I).

6. The method according to any one of the preceding claims,
**characterised in that** the device (D) outputs encrypted calibration information or encrypted re-standardisation information for a measurement operation.

7. The method according to claim 6,
**characterised in that** the output encrypted calibration information or the encrypted re-standardisation information is readable on the device via QR tag and smartphone.

8. The method according to claim 6,
**characterised in that** the output encrypted calibration information or the encrypted re-standardisation information is readable on the device via character sequences.

9. The method according to any one of the preceding claims,
**characterised in that** the device is calibrated or standardised in accordance with the determined measurement data of the working standard (A).

## Revendications

1. Procédé pour l'acquisition sécurisée de données d'appareils, notamment d'appareils de mesure, aux fins d'étalonnage ou de vérification, **caractérisé en ce que** :
- un flux de processus numérisé est établi dans une chaîne de données (DLT), notamment une blockchain, créée et sécurisée en utilisant une technologie de registre distribué,
- un appareil (D), configuré pour émettre des informations de mesure cryptées, notamment des données issues de processus de mesure, est enregistré dans la chaîne de données (DLT) avec ses propriétés d'appareil de mesure implémentées, notamment des caractéristiques d'identification,
- une instance de contrôle (I) reçoit l'accès aux informations de mesure de l'appareil (D),
- l'instance de contrôle (I) établit une interface fonctionnelle, sécurisée par la chaîne de données (DLT), entre l'appareil (D) et un étalon de travail (A), l'étalon de travail étant pourvu de données d'identification de telle sorte qu'il existe une identification cryptée de l'étalon de travail et une identification non cryptée distincte de ce dernier, l'étalon de travail (A) étant conçu pour déterminer des données de mesure, et
- les données de mesure déterminées de l'étalon de travail (A) sont lues de manière cryptée et transmises de manière cryptée à l'instance de contrôle (I),
- l'instance de contrôle (I) provoque, en cas de succès de l'étalonnage ou de la vérification de l'appareil, un stockage de ce résultat dans la chaîne de données (DLT).

2. Procédé selon la revendication 1,
**caractérisé en ce que** les propriétés d'appareil de mesure d'un appareil de mesure (D), notamment apte à la vérification, sont choisies dans le groupe comprenant : le fabricant, le type d'appareil, le type de construction, l'homologation de modèle, la version de matériel, la version de logiciel, le certificat, l'instance, les données de vérification, la date de contrôle, la durée de validité.

3. Procédé selon la revendication 1,
**caractérisé en ce qu'**un appareil de mesure (D) apte à la vérification est configuré pour émettre des données de vérification de manière cryptée pour chaque mesure.

4. Procédé selon l'une quelconque des revendications précédentes,
**caractérisé en ce que** l'étalon de travail (A) inclut une fonction de surveillance active permettant de constater l'intégrité de l'étalon de travail.

5. Procédé selon l'une quelconque des revendications précédentes,
**caractérisé en ce que** l'étalon de travail (A) reçoit une nouvelle identification cryptée par l'instance de contrôle (I) pour chaque flux de processus.

6. Procédé selon l'une quelconque des revendications précédentes,
**caractérisé en ce que** l'appareil (D) émet une information d'étalonnage cryptée ou une information de vérification ultérieure cryptée lors d'un processus de mesure.

7. Procédé selon la revendication 6,
**caractérisé en ce que** l'information d'étalonnage cryptée émise ou l'information de vérification ultérieure cryptée émise est lisible sur l'appareil par un code QR (QR-tag) et un smartphone.

8. Procédé selon la revendication 6,
**caractérisé en ce que** l'information d'étalonnage cryptée émise ou l'information de vérification ultérieure cryptée émise est lisible sur l'appareil par des chaînes de caractères.

9. Procédé selon l'une quelconque des revendications précédentes,
**caractérisé en ce que** l'appareil est étalonné ou vérifié conformément aux données de mesure déterminées de l'étalon de travail (A).
